# FASCICULE DE BREVET EUROPEEN

(11) **EP 0 470 008 B1**
(45) Date de publication et mention de la délivrance du brevet: **12.10.1994**
(21) Numéro de dépôt: 91420023.3
(22) Date de dépôt: 25.01.1991
(51) Int. Cl.: C08F 20/28, E02D 3/12

(54) **Compositions polymérisables et utilisation de ces compositions pour l'étanchement des milieux souterrains**
Polymerisierbare Zusammensetzungen und deren Verwendung für das Abdichten unterirdischer Medien
Polymerisable compositions and use of these compositions for the sealing of underground media

(30) Priorité: 30.07.1990 FR 9009922
(43) Date de publication de la demande: 05.02.1992
(73) Titulaire: RHONE-POULENC CHIMIE, 92408 Courbevoie Cédex (FR)
(72) Inventeur: Maurer, Robert, F-69450 Saint Cyr au Mont d'Or (FR)
(74) Mandataire: Seugnet, Jean Louis

(56) Documents cités:
- DE-A- 2 749 386
- DE-A- 3 611 307
- GB-A- 1 335 714
- CHEMICAL ABSTRACTS, vol. 112, no. 4, 22 janvier 1990, pages 59-60, abrégé no. 22078q, Columbus, Ohio, US; & JP-A-01 141 851 (MUTSUI PETROCHEMICAL IND., LTD) 02-06-1989
- Enc. of Pol. Sci. and Eng., H.F. Mark et al., vol.9, Wiley & Sons, 1987, p. 834-839.
- Polymer Handbook, J. Brandrup et al., Wiley & Sons, 1989, p.II/67, II/75, II/79.

## Description

La présente invention concerne de nouvelles compositions polymérisables, à base d'au moins un ester, soluble ou dispersible dans l'eau, d'un acide carboxylique insaturé d'alcoxyalkyle.

Ces compositions peuvent être notamment utilisées pour réaliser l'étanchéité des milieux souterrains.

La consolidation des sols, l'étanchement des structures souterraines, telles que tunnels de métro, égouts, parkings souterrains, bassins de rétention, piscines, forages pétroliers, puits de mines, barrages, présentent des problèmes.

Parmi les nombreuses solutions qui ont été proposées, on peut citer les coulis de ciment, les coulis de silicates et les coulis de résines synthétiques.

Les résines synthétiques dérivant des acides aliphatiques insaturés, plus spécifiquement de l'acide acrylique et de l'acide méthacrylique, ont été notamment préconisées.

Ainsi le brevet FR-A-1 113 937 décrit l'utilisation d'un dérivé de l'acide acrylique, tel que l'acrylamide, les N-alkyl-acrylamides, l'acrylonitrile, les acrylates d'alkyle et les acrylates métalliques et d'un alkylidène diacrylamide.

L'inconvénient majeur de telles compositions réside dans la toxicité de certains de ces composés, plus particulièrement de l'acrylamide qui est le plus fréquemment utilisé.

Les impératifs écologiques de non-toxicité des produits susceptibles d'être en contact avec l'eau, ont conduit à la recherche de composés de substitution.

C'est ainsi que le brevet GB-A-1 303 456 décrit des compositions comprenant un acrylate ou un méthacrylate d'hydroxyalkyle, pouvant être associé à un diacrylate ou diméthacrylate d'alkylène glycol, un sel soluble d'argent et un persulfate métallique.

De même, le brevet GB-A-1 335 714 décrit des compositions comprenant l'acrylate d'hydroxyéthyle pouvant être associé au méthacrylate de 2-diméthylaminoéthyle et à un persulfate d'ammonium.

Ces compositions ne peuvent pas comporter de fortes concentrations de monomères, car l'exothermie provoquée par leur polymérisation conduit à une forte dilatation et à la formation de mousses, ce qui est gênant pour certaines applications, notamment pour les opérations d'obturation de fissures dans les structures souterraines.

La présente invention permet de résoudre ces différents problèmes de non-toxicité et d'efficacité.

Plus précisément elle consiste en des compositions aqueuses polymérisables caractérisées en ce qu'elles comportent :
- au moins un monomère soluble ou dispersible dans l'eau, de formule générale (I) : 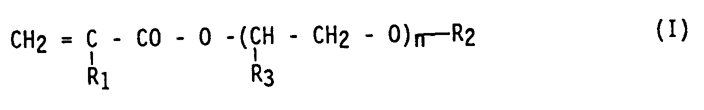 dans laquelle :
   . R₁ représente un atome d'hydrogène ou un radical méthyle,
   . R₂ représente un radical méthyle ou éthyle,
   . R₃ représente un atome d'hydrogène ou un radical méthyle,
   . n représente un nombre entier ou fractionnaire de 3 à 6
- au moins un initiateur choisi parmi les persulfates de métal alcalin, le persulfate d'ammonium et le peroxyde d'hydrogène,
- au moins un accélérateur de polymérisation,
- et de l'eau.

Le persulfate d'ammonium et le persulfate de sodium sont les initiateurs le plus souvent utilisés.

La quantité d'initiateur est habituellement de 0,1 % à 50 % en poids par rapport au poids de monomère de formule (I) et de préférence de 0,5 % à 20 % en poids.

L'accélérateur de polymérisation, appelé également activateur, est généralement une amine.

Les amines tertiaires sont préférées.

On peut aussi utiliser les amines primaires, ou secondaires ou les chlorhydrates d'amines, mais la vitesse de polymérisation obtenue avec ces accélérateurs est moins élevée qu'avec les amines tertiaires.

L'amine accélérateur de polymérisation peut comporter dans sa formule d'autres fonctions chimiques, telles que par exemple des fonctions nitrile ou hydroxyle ou ester.

Les fonctions esters peuvent en particulier provenir de l'estérification par l'acide acrylique ou l'acide méthacrylique d'une ou de plusieurs fonctions hydroxyle se trouvant dans la formule de l'amine.

Parmi les amines tertiaires préférées, on peut citer le diéthylamino-propionitrile, la triéthanolamine, le diméthylamino-acétonitrile, la diéthylène-triamine, la N,N-diméthylaniline, le méthacrylate de diméthylaminoéthyle, l'acrylate de diméthylaminoéthyle, le méthacrylate de triéthanolamine, l'acrylate de triéthanolamine.

Habituellement l'accélérateur représente de 0,1 % à 100 % en poids du poids de monomère de formule (I) et de préférence de 0,5 % à 80 % .

Le monomère de formule (I) est préférentiellement un méthacrylate, c'est-à-dire que R₁ est un radical méthyle.

En effet, bien que les acrylates (R₁=H) soient plus réactifs, on utilise de préférence des méthacrylates pour l'étanchement des structures souterraines pour privilégier au maximum le critère de non-toxicité.

Les composés de formule (I) dans laquelle le radical R₃ représente un atome d'hydrogène, c'est-à-dire les acrylates et préférentiellement les méthacrylates de polyéthoxyalkyle, sont généralement préférés.

Parmi les composés de formule (I) le méthacrylate de (méthoxy-triéthoxy)-2 éthyle (n=4) est le plus utilisé, seul ou en mélange avec ses homologues inférieur ou supérieurs (n = 3, 5 ou 6).

Généralement les compositions aqueuses de l'invention comportent de 10 % à 95 % de monomère de formule (I) et de préférence de 20 % à 90 %.

Le monomère de formule (I) permet l'utilisation de compositions très concentrées, car on n'observe pas d'échauffement très important, ni de dilatation excessive qui est gênante par exemple lors de l'obturation de fissures.

Les monomères de formule (I) peuvent être préparés par transestérification entre un ester d'alkyle inférieur, le plus souvent de méthyle, de l'acide acrylique ou méthacrylique et un éther-alcool de formule (II) : 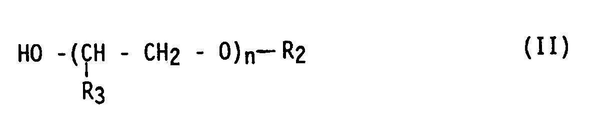
dans laquelle :
- R₂ représente un radical méthyle ou éthyle,
- R₃ représente un atome d'hydrogène ou un radical méthyle,
- n représente un nombre entier ou fractionnaire de 3 à 6, dans les conditions habituelles et en présence des catalyseurs connus de ce type de réaction, comme par exemple les alcoolates de sodium, de potassium ou de lithium ; les carbonates de sodium, de potassium ou de lithium ; le titanate de butyle ; les hydroxydes de sodium, de potassium ou de lithium.

Les éthers-alcools de formule (II) sont préparés par réaction de l'oxyde d'éthylène ou de propylène sur le méthanol ou l'éthanol à raison de 3 à 6 molécules d'oxyde d'éthylène ou de propylène pour une molécule de méthanol ou d'éthanol ou sont préparés par réaction de l'oxyde d'éthylène ou de propylène sur des éthers-alcools de formule générale (III) : 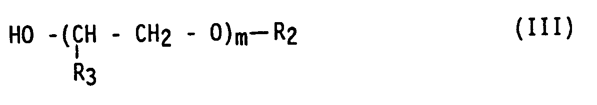
dans laquelle :
- m représente un nombre de 1 à 3,
- R₂ représente un radical méthyle ou éthyle,
- R₃ représente un atome d'hydrogène ou un radical méthyle, de manière à augmenter le nombre de motifs 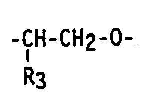 de la valeur m à la valeur n souhaitée.

Les compositions de l'invention comprennent souvent un composé appelé réticulant.

Il s'agit généralement d'un ester comportant au moins 2 doubles liaisons éthyléniques, afin de pouvoir créer, lors de la polymérisation des monomères de formule (I), des liaisons entre deux chaînes de polymère.

Ce réticulant représente habituellement de 0,1 à 20 % en poids par rapport au poids du monomère de formule (I) et de préférence de 0,2 % à 10 % en poids par poids.

Parmi les réticulants utilisés couramment, on peut citer par exemple le diméthacrylate de tétraéthylèneglycol, un diméthacrylate de polyéthylèneglycol et le méthacrylate d'allyle.

Les compositions de l'invention sont mises en oeuvre de manière connue variant selon le type d'utilisation.

Elles peuvent comporter les additifs usuels permettant notamment d'ajuster leur densité et leur viscosité aux valeurs souhaitées : charges de gravité de type sulfate de baryum, charges renforçantes ou diluantes diverses de type bentonite, silice, épaississants de type gomme xanthane.

En pratique, les compositions de l'invention sont injectées dans les milieux souterrains à étancher.

Dans le cas de la consolidation des sols, tels que des alluvions, on peut également mettre en oeuvre des compositions par imprégnation.

Pour des questions de stockage on prépare habituellement deux solutions qui ne sont mélangées que lors de leur utilisation, pour former les compositions de l'invention :
- une première solution contenant le ou les monomères de formule (I), le cas échéant un réticulant tel que défini précédemment et l'accélérateur de polymérisation ;
- une deuxième solution contenant l'eau, l'initiateur et les éventuels autres additifs.

Les exemples qui suivent illustrent l'invention.

### EXEMPLE 1 : Préparation du méthacrylate de (méthoxy-triéthoxy)-2 éthyle

### A) Préparation du (méthoxy-triéthoxy)-2 éthanol

Dans un ballon de 6 litres comportant un système d'agitation, un thermomètre, un réfrigérant ascendant et de moyens de chauffage, on charge :
- éther monométhylique du triéthylèneglycol (M = 163,6) : 2454 g (15 mol)
- oxyde d'éthylène (M = 44,05) : 662,6 g (15,04 mol)
- KOH : 4,4 g
On chauffe sous agitation pendant 1 heure 10 à une température de 150 à 165°C
Le produit obtenu présente un indice d'OH de 271,4.

Il correspond à la formule (II) pour laquelle R₂ = CH₃, R₃ = H et n = 4.

### B) Préparation du méthacrylate de (méthoxy-triéthoxy)-2 éthyle

Dans un ballon multicols muni d'une agitation, d'un thermomètre, d'ouvertures pour l'introduction des divers réactifs et catalyseurs, d'un tube plongeant, d'une colonne à distiller azéotropique, on charge :
- (méthoxy-triéthoxy)-2 éthanol préparé en A (M = 206,7) : 1137,1 g (5,5 mol)
- méthacrylate de méthyle (M = 100,12) : 633,3 g ( 6,3 mol)
- hexane : 400 cm³
- inhibiteur NONOX (N,N'-diphényl paraphénylène diamine) : 1,51 g (4,2 x 10⁻³)
- lithine : 1,8 g (7,31 x 10⁻² mol)
On élimine en 5 h, par distillation azéotropique avec l'hexane, le méthanol qui se forme dans la réaction.

La température passe de 105°C au début de la réaction à 120°C en fin de réaction.

On obtient 1704,5 g de produit brut.

Ce produit est étêté pendant 1 h à 110°C sous une pression de 6600 Pa, que l'on ramène à 4000 Pa en fin d'opération.

On obtient 1485,3 g de méthacrylate de (méthoxy-triéthoxy)-2 éthyle, que l'on neutralise à pH 5 à l'aide d'acide sulfurique, puis que l'on décolore et filtre.

Le produit final est un liquide limpide rougeâtre.

### EXEMPLE 2 : Préparation du méthacrylate de (méthoxy-tétraéthoxy)-2 éthyle

### A) Préparation du (méthoxy-tétraéthoxy)-2 éthanol

Dans l'appareillage décrit dans l'exemple 1 A),on charge :
- éther monométhylique du triéthylèneglycol (M = 163,6) : 2454 g (15 mol)
- oxyde d'éthylène (M = 44,05) : 1325 g (30 mol)
- KOH : 4,4 g
On chauffe sous agitation pendant 2 heures à une température de 150 à 165°C
Le produit obtenu présente un indice d'OH de 223,3.

Il correspond à la formule (II) pour laquelle R₂ = CH₃, R₃ = H et n = 5.

### B) Préparation du méthacrylate de (méthoxy-tétraéthoxy)-2 éthyle

Dans l'appareillage utilisé dans l'exemple 1 B), on charge :
- (méthoxy-tétraéthoxy)-2 éthanol préparé en A (M = 251,3) : 1130,8 g (4,5 mol)
- méthacrylate de méthyle (M = 100,12) : 518 g ( 5,2 mol)
- hexane : 400 cm³
- inhibiteur NONOX : 1,44 g (4 x 10⁻³ mol)
- lithine : 1,47 g (6,03 x 10⁻² mol)
On élimine en 5 h, par distillation azéotropique avec l'hexane, le méthanol qui se forme dans la réaction.

La température passe de 103°C au début de la réaction à 120°C en fin de réaction.

On obtient 1729 g de produit brut.

Ce produit est étêté pendant 1 h à 115°C sous une pression de 6600 Pa, que l'on ramène à 4000 Pa en fin d'opération.

On obtient 1422 g de méthacrylate de (méthoxy-tétraéthoxy)-2 éthyle, que l'on neutralise jusqu'à pH 3, à l'aide d'acide phosphorique, puis que l'on décolore et filtre.

Le produit final est un liquide limpide brun verdâtre.

### EXEMPLE 3 : Préparation du méthacrylate de (méthoxy-pentaéthoxy)-2 éthyle

### A) Préparation du (méthoxy-pentaéthoxy)-2 éthanol

Dans l'appareillage décrit dans l'exemple 1 A), on charge :
- éther monométhylique du triéthylèneglycol (M = 163,6) : 2454 g (15 mol)
- oxyde d'éthylène (M = 44,05) : 1987 g (45 mol)
- KOH : 4,4 g
On chauffe sous agitation pendant 3 heures 20 à une température de 150 à 165°C
Le produit obtenu présente un indice d'OH de 190,8.

Il correspond à la formule (II) pour laquelle R₂ = CH₃, R₃ = H et n = 6.

### B) Préparation du méthacrylate de (méthoxy-pentaéthoxy)-2 éthyle

Dans l'appareillage utilisé dans l'exemple 1 B), on charge :
- (méthoxy-pentaéthoxy)-2 éthanol préparé en A (M = 294,1) : 1029,3 g (3,5 mol)
- méthacrylate de méthyle (M = 100,12) : 403 g ( 4,02 mol)
- hexane : 400 cm³
- inhibiteur NONOX : 1,27 g (3,52 x 10⁻³ mol)
- lithine : 1,15 g (4,69 x 10⁻² mol)
On élimine en 7 h, par distillation azéotropique avec l'hexane, le méthanol qui se forme dans la réaction.

La température passe de 95°C au début de la réaction à 120°C en fin de réaction.

On obtient 1465 g de produit brut.

Ce produit est étêté pendant 1 h à 120°C sous une pression de 10000 Pa, que l'on ramène à 6600 Pa en fin d'opération.

On obtient 1465 g de méthacrylate de (méthoxy-pentaéthoxy)-2 éthyle, que l'on neutralise jusqu'à pH 4, à l'aide d'acide sulfurique, puis que l'on décolore et filtre.

Le produit final est un liquide limpide brun rougeâtre.

### EXEMPLE 4

On prépare tout d'abord une solution A par mélange à température ambiante de :
- 100 g de méthacrylate de (méthoxy-triéthoxy)-2 éthyle préparé dans l'exemple 1,
- 0,5 g de diméthacrylate de tétraéthylèneglycol (réticulant)
A partir de cette solution, on prépare différentes compositions aqueuses A1, A2, A3, A4 et A5 comportant différentes concentrations en monomère.

Le tableau I ci-après indique la nature des constituants de ces compositions, leurs quantités respectives en grammes ainsi que :
- le temps nécessaire à leur polymérisation (temps de prise)
- la température maximale (T° max) atteinte pendant la polymérisation.

**TABLEAU I**

| Compositions | Solution A | Triéthanol amine | Eau | Persulfate de Na | temps de prise | T° max |
|---|---|---|---|---|---|---|
| A1 | 20 | 1,5 | 30 | 1,5 | 5 min | 50°C |
| A2 | 25 | 1,5 | 25 | 1,5 | 4 min | 55°C |
| A3 | 30 | 1,5 | 20 | 1,5 | 3 min 40 s | 59°C |
| A4 | 40 | 1,5 | 10 | 1,5 | 3 min 55 s | 68°C |
| A5 | 45 | 1,5 | 5 | 1,5 | 4 min 15 s | 67°C |

On obtient avec les différentes compositions A1, A2, A3, A4 et A5 des gels exempts de liquide surnageant.

Des compositions A'1, A'2, A'3, A'4 et A'5 correspondant aux compositions A1, A2, A3, A4 et A5, mais dans lesquels le méthacrylate de (méthoxy-triéthoxy)-2 éthyle est remplacé par la même quantité de méthacrylate d'hydroxy-2 éthyle, présentent lors de leur polymérisation des températures maximales de :
- A'1 : 68°C
- A'2 : 83°C
- A'3 : 92°C
- A'4 : > 100°C (réaction violente avec fort crépitement)
- A'5 : > 100°C (réaction violente avec fort crépitement)

### EXEMPLE 5

On prépare tout d'abord une solution B par mélange à température ambiante de :
- 100 g de méthacrylate de (méthoxy-triéthoxy)-2 éthyle préparé dans l'exemple 1,
- 1 g de méthacrylate d'allyle (réticulant)
A partir de cette solution, on prépare différentes compositions aqueuses B1, B2, B3, B4 et B5 comportant différentes concentrations en monomère.

Le tableau II ci-après indique la nature des constituants de ces compositions, leurs quantités respectives en grammes ainsi que :
- le temps nécessaire à leur polymérisation (temps de prise)
- la température maximale (T° max) atteinte pendant la polymérisation.

**TABLEAU II**

| Compositions | Solution B | Triéthanol amine | Eau | Persulfate de Na | temps de prise | T° max |
|---|---|---|---|---|---|---|
| B1 | 20 | 1,5 | 30 | 1,5 | 6 min 7 s | 43°C |
| B2 | 25 | 1,5 | 25 | 1,5 | 4 min 50 s | 49°C |
| B3 | 30 | 1,5 | 20 | 1,5 | 4 min 30 s | 55°C |
| B4 | 40 | 1,5 | 10 | 1,5 | 5 min 14 s | 63°C |
| B5 | 45 | 1,5 | 5 | 1,5 | 7 min 17 s | 63°C |

On obtient avec les différentes compositions B1, B2, B3, B4 et B5 des gels exempts de liquide surnageant.

Des compositions B'1, B'2, B'3, B'4 et B'5 correspondant aux compositions B1, B2, B3, B4 et B5, mais dans lesquels le méthacrylate de (méthoxy-triéthoxy)-2 éthyle est remplacé par la même quantité de méthacrylate d'hydroxy-2 éthyle, présentent lors de leur polymérisation des températures maximales de :
- B'1 : 72°C
- B'2 : 76°C
- B'3 : 92°C (réaction avec crépitement)
- B'4 : > 100°C (réaction violente avec fort crépitement, forte expansion et jaunissement)
- B'5 : > 100°C (réaction violente avec crépitement, forte expansion, jaunissement et débordement)

### EXEMPLE 6

On prépare tout d'abord une solution C par mélange à température ambiante de :
- 100 g de méthacrylate de (méthoxy-diéthoxy)-2 éthyle
- 1 g de méthacrylate d'allyle (réticulant)
A partir de cette solution, on prépare différentes compositions aqueuses C1, C2, C3, C4 et C5 comportant différentes concentrations en monomère.

Le tableau III ci-après indique la nature des constituants de ces compositions, leurs quantités respectives en grammes ainsi que :
- le temps nécessaire à leur polymérisation (temps de prise)
- la température maximale (T° max) atteinte pendant la polymérisation.

**TABLEAU III**

| Compositions | Solution C | Triéthanol amine | Eau | Persulfate de Na | temps de prise | T° max |
|---|---|---|---|---|---|---|
| C1 | 20 | 1,5 | 30 | 1,5 | 6 min 30 s | 50°C |
| C2 | 25 | 1,5 | 25 | 1,5 | 6 min | 51°C |
| C3 | 30 | 1,5 | 20 | 1,5 | 8 min | 50°C |
| C4 | 40 | 1,5 | 10 | 1,5 | 6 min | 56°C |
| C5 | 45 | 1,5 | 5 | 1,5 | 5 min | 72°C |

On obtient avec les différentes compositions C4 et C5 des gels exempts de liquide surnageant.

Avec les compositions C1, C2 et C3, on obtient des gels comportant du liquide surnageant en quantité décroissante de C1 à C3.

### EXEMPLE 7

On prépare tout d'abord une solution D par mélange à température ambiante de :
- 94 g de méthacrylate de (méthoxy-triéthoxy)-2 éthyle
- 6 g de diméthacrylate de polyéthylèneglycol (réticulant) (de masse moléculaire 400)
A partir de cette solution, on prépare différentes compositions aqueuses D1, D2, D3, D4, D5, D6 et D7 comportant différentes concentrations en monomère.

Le tableau IV ci-après indique la nature des constituants de ces compositions, leurs quantités respectives en grammes ainsi que :
- le temps nécessaire à leur polymérisation (temps de prise)
- la température maximale (T° max) atteinte pendant la polymérisation.

**TABLEAU I**

| Compositions | Solution D | MADMAE * | Eau | Persulfate de Na | temps de prise | T° max |
|---|---|---|---|---|---|---|
| D1 | 40 | 10 | 50 | 3 | 50 s | 61°C |
| D2 | 30 | 10 | 60 | 3 | 56 s | 56°C |
| D3 | 20 | 10 | 70 | 3 | 1 min 12 s | 51°C |
| D4 | 20 | 5 | 75 | 3 | 1 min 22 s | 43°C |
| D5 | 20 | 10 | 70 | 5 | 1 min | 54°C |
| D6 | 15 | 5 | 80 | 5 | 1 min 58 s | 43°C |
| D7 | 40 | 10 | 50 | 5 | 48 s | 63°C |

| | | | | | | |
|---|---|---|---|---|---|---|
| * MADMAE = méthacrylate de diméthylaminoéthyle | | | | | | |

On obtient avec les différentes compositions D1 et D7 des gels exempts de liquide surnageant.

Avec les compositions D1, D2 et D7, on obtient des gels opaques, tandis qu'avec des compositions D3,D4 et D5, on obtient des gels translucides qui transmettent les vibrations.

Les différents gels obtenus à partir des compositions D1 à D7 ont une couleur beige.

## Revendications (Revendications pour l'(les) Etat(s) contractant(s) suivant(s): DE, GB, FR, IT, NL, SE, LI, CH, BE)

1. Compositions aqueuses polymérisables compertant
- au moins un monomère soluble ou dispersible dans l'eau, de formule générale (I) 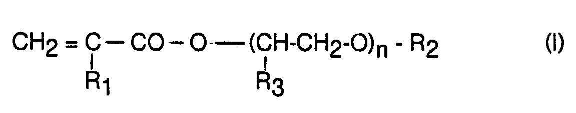 dans laquelle
. R1 représente un atome d'hydrogène ou un radical méthyle,
. R2 représente un radical méthyle ou éthyle,
. R3 représente un atome d'hydrogène ou un radical méthyle,
. n représente un nombre entier de 3 à 6 ;
- au moins un initiateur ;
. au moins un accélérateur de polymérisation ;
. et de l'eau ;
**compositions caractérisées en ce que**
. la quantité de monomère(s) de formule (I) représente de 10 à 95% en poids par rapport au poids desdites compositions ;
. lesdites compositions contiennent en outre au moins 0,1% en poids par rapport au poids de monomère(s) de formule (I), d'un composé réticulant choisi parmi les esters comportant au moins deux liaisons éthyléniques ;
. ledit initiateur est choisi parmi les persulfates de métal alcalin, le persulfate d'ammonium et le peroxyde d'hydrogène.

2. Compositions selon la revendication 1, caractérisées en ce que l'initiateur est le persulfate d'ammonium ou le persulfate de sodium.

3. Compositions selon l'une des revendications 1 ou 2, caractérisées en ce que la quantité d'initiateur est de 0,1 % à 50 % en poids par rapport au poids de monomère de formule (I).

4. Compositions selon l'une des revendications 1 à 3, caractérisées en ce que l'accélérateur de polymérisation est une amine.

5. Compositions selon l'une des revendications 1 à 4, caractérisées en ce que l'accélérateur de polymérisation est une amine tertiaire choisie parmi le diéthylamino-propionitrile, la triéthanolamine, le diméthylamino-acétonitrile, la diéthylène-triamine, la N,N-diméthylaniline, le méthacrylate de diméthylaminoéthyle, l'acrylate de diméthylaminoéthyle, le méthacrylate de triéthanolamine, l'acrylate de triéthanolamine.

6. Compositions selon l'une des revendications 1 à 5, caractérisées en ce que l'accélérateur de polymérisation représente de 0,1 % à 100 % en poids du poids de monomère de formule (I).

7. Compositions selon l'une des revendications 1 à 6, caractérisées en ce que le monomère de formule (I) est le méthacrylate de (méthoxy-triéthoxy)-2 éthyle (n=4), seul ou en mélange avec ses homologues inférieur ou supérieurs (n = 3, 5 ou 6).

8. Compositions selon l'une des revendications 1 à 7, caractérisées en ce qu'elles comportent de 20 % à 90 % de monomère de formule (I).

9. Compositions selon l'une des revendications 1 à 8, caractérisées en ce que le composé réticulant est le diméthacrylate de tétraéthylèneglycol, un diméthacrylate de polyéthylèneglycol ou le méthacrylate d'allyle.

10. Compositions selon la revendication 9, caractérisées en ce que le composé réticulant représente de 0,1 % à 20 % en poids par rapport au poids du monomère de formule (I).

11. Utilisation des compositions faisant l'objet de l'une quelconque des revenications 1 à 10 pour réaliser l'étancheité des milieux souterrains.

## Revendications (Revendications pour l'(les) Etat(s) contractant(s) suivant(s): ES)

1. Procédé d'étanchement d'un milieu souterrain, caractérisé en ce qu'on introduit dans ledit milieu souterrain une composition aqueuse polymérisable comportant :
- de 10 à 95% en poids par rapport au poids de ladite composition d'au moins un monomère soluble ou dispersible dans l'eau, de formule générale (I) 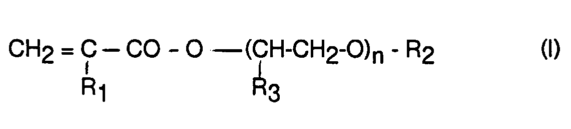 dans laquelle
. R1 représente un atome d'hydrogène ou un radical méthyle,
. R2 représente un radical méthyle ou éthyle,
. R3 représente un atome d'hydrogène ou un radical méthyle,
. n représente un nombre entier de 3 à 6 ;
- au moins 0,1% en poids par rapport au poids de monomère(s) de formule (I), d'un composé réticulant choisi parmi les esters comportant au moins deux liaisons éthyléniques ;
- au moins un initiateur choisi parmi les persulfates de métal alcalin, le persulfate d'ammonium et le peroxyde d'hydrogène ;
. au moins un accélérateur de polymérisation,
ladite composition réticulant in situ.

2. Procédé selon la revendication 1, caractérisé en ce que l'initiateur est le persulfate d'ammonium ou le persulfate de sodium.

3. Procédé selon l'une des revendications 1 ou 2, caractérisé en ce que la quantité d'initiateur est de 0,1 % à 50 % en poids par rapport au poids de monomère de formule (I).

4. Procédé selon l'une des revendications 1 à 3, caractérisé en ce que l'accélérateur de polymérisation est une amine.

5. Procédé selon l'une des revendications 1 à 4, caractérisé en ce que l'accélérateur de polymérisation est une amine tertiaire choisie parmi le diéthylamino-propionitrile, la triéthanolamine, le diméthylamino-acétonitrile, la diéthylène-triamine, la N,N-diméthylaniline, le méthacrylate de diméthylaminoéthyle, l'acrylate de diméthylaminoéthyle, le méthacrylate de triéthanolamine, l'acrylate de triéthanolamine.

6. Procédé selon l'une des revendications 1 à 5, caractérisé en ce que l'accélérateur de polymérisation représente de 0,1 % à 100 % en poids du poids de monomère de formule (I).

7. Procédé selon l'une des revendications 1 à 6, caractérisé en ce que le monomère de formule (I) est le méthacrylate de (méthoxy-triéthoxy)-2 éthyle (n=4), seul ou en mélange avec ses homologues inférieur ou supérieurs (n = 3, 5 ou 6).

8. Procédé selon l'une des revendications 1 à 7, caractérisé en ce que la composition comporte 20 % à 90 % de monomère de formule (I).

9. Procédé selon l'une des revendications 1 à 8, caractérisé en ce que le composé réticulant est le diméthacrylate de tétraéthylèneglycol, un diméthacrylate de polyéthylèneglycol ou le méthacrylate d'allyle.

10. Procédé selon la revendication 9, caractérisé en ce que le composé réticulant représente de 0,1 % à 20 % en poids par rapport au poids du monomère de formule (I).

## Claims (Claims for the following Contracting State(s): DE, GB, FR, IT, NL, SE, LI, CH, BE)

1. Polymerizable aqueous compositions comprising
- at least one water-soluble or dispersible monomer of general formula (I) 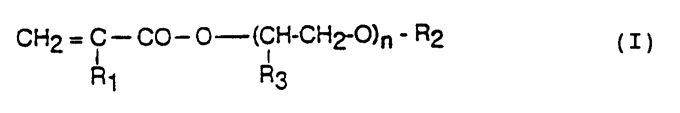 in which
- R₁ denotes a hydrogen atom or a methyl radical,
- R₂ denotes a methyl or ethyl radical,
- R₃ denotes a hydrogen atom or a methyl radical,
- n denotes an integer from 3 to 6,
- at least one initiator,
- at least one polymerization accelerator, and
- water,
compositions characterized in that
- the quantity of monomer(s) of formula (I) represents from 10 to 95 % by weight relative to the weight of the said compositions,
- the said compositions additionally contain at least 0.1 % by weight, relative to the weight of monomer(s) of formula (I), of a crosslinking compound chosen from esters containing at least two olefinic bonds,
- the said initiator is chosen from alkali metal persulphates, ammonium persulphate and hydrogen peroxide.

2. Compositions according to Claim 1, characterized in that the initiator is ammonium persulphate or sodium persulphate.

3. Compositions according to either of Claims 1 and 2, characterized in that the quantity of initiator is from 0.1 % to 50 % by weight relative to the weight of monomer of formula (I).

4. Compositions according to one of Claims 1 to 3, characterized in that the polymerization accelerator is an amine.

5. Compositions according to one of Claims 1 to 4, characterized in that the polymerization accelerator is a tertiary amine chosen from diethylaminopropionitrile, triethanolamine, dimethylaminoacetonitrile, diethylenetriamine, N,N-dimethylaniline, dimethylaminoethyl methacrylate, dimethylaminoethyl acrylate, triethanolamine methacrylate and triethanolamine acrylate.

6. Compositions according to one of Claims 1 to 5, characterized in that the polymerization accelerator represents from 0.1 % to 100 % by weight of the weight of monomer of formula (I).

7. Compositions according to one of Claims 1 to 6, characterized in that the monomer of formula (I) is 2-(methoxytriethoxy)ethyl methacrylate (n = 4), by itself or mixed with its lower or higher homologues (n = 3, 5 or 6).

8. Compositions according to one of Claims 1 to 7, characterized in that they comprise from 20 % to 90 % of monomer of formula (I).

9. Compositions according to one of Claims 1 to 8, characterized in that the crosslinking compound is tetraethylene glycol dimethacrylate, a polyethylene glycol dimethacrylate or allyl methacrylate.

10. Compositions according to Claim 9, characterized in that the crosslinking compound represents from 0.1 % to 20 % by weight relative to the weight of the monomer of formula (I).

11. Use of the compositions forming the subject of any one of Claims 1 to 10 in order to seal subterranean environments.

## Claims (Claims for the following Contracting State(s): ES)

1. Process for sealing a subterranean environment, characterized in that into the said underground area a polymerizable aqueous composition is introduced comprising:
- from 10 to 95 % by weight relative to the weight of the said composition of at least one water-soluble or dispersible monomer of general formula (I) 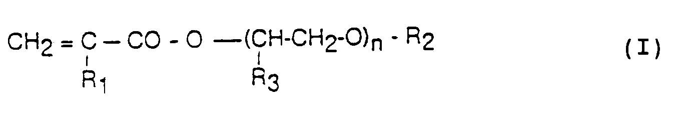 in which
- R₁ denotes a hydrogen atom or methyl radical,
- R₂ denotes a methyl or ethyl radical,
- R₃ denotes a hydrogen atom or a methyl radical,
- n denotes an integer from 3 to 6,
- at least 0.1 % by weight relative to the weight of monomer(s) of formula (I) of a crosslinking compound chosen from esters containing at least two ethylenic bonds,
- at least one initiator chosen from alkali metal persulphates, ammonium persulphate and hydrogen peroxide,
- at least one polymerization accelerator, the said composition crosslinking in situ.

2. Process according to Claim 1, characterized in that the initiator is ammonium persulphate or sodium persulphate.

3. Process according to either of Claims 1 and 2, characterized in that the quantity of initiator is from 0.1 % to 50 % by weight relative to the weight of monomer of formula (I).

4. Process according to one of Claims 1 to 3, characterized in that the polymerization accelerator is an amine.

5. Process according to one of Claims 1 to 4, characterized in that the polymerization accelerator is a tertiary amine chosen from diethylaminopropionitrile, triethanolamine, dimethylaminoacetonitrile, diethylenetriamine, N,N-dimethylaniline, dimethylaminoethyl methacrylate, dimethylaminoethyl acrylate, triethanolamine methacrylate and triethanolamine acrylate.

6. Process according to one of Claims 1 to 5, characterized in that the polymerization accelerator represents from 0.1 % to 100 % by weight of the weight of monomer of formula (I).

7. Process according to one of Claims 1 to 6, characterized in that the monomer of formula (I) is 2-(methoxytriethoxy)ethyl methacrylate (n = 4), by itself or mixed with its lower or higher homologues (n = 3, 5 or 6).

8. Process according to one of Claims 1 to 7, characterized in that they comprise from 20 % to 90 % of monomer of formula (I).

9. Process according to one of Claims 1 to 8, characterized in that the crosslinking compound is tetraethylene glycol dimethacrylate, a polyethylene glycol dimethacrylate or allyl methacrylate.

10. Process according to Claim 9, characterized in that the crosslinking compound represents from 0.1 % to 20 % by weight relative to the weight of the monomer of formula (I).

## Patentansprüche (Patentansprüche für folgende(n) Vertragsstaat(en): DE, GB, FR, IT, NL, SE, LI, CH, BE)

1. Polymerisierbare wäßrige Zusammensetzungen, umfassend
- mindestens ein in Wasser lösliches oder dispergierbares Monomer der allgemeinen Formel (I) 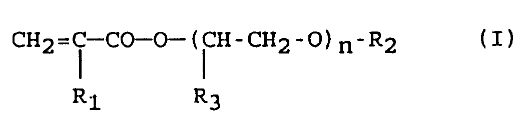 in der
· R₁ ein Wasserstoffatom oder einen Methylrest darstellt,
· R₂ einen Methylrest oder einen Ethylrest bedeutet,
· R₃ ein Wasserstoffatom oder einen Methylrest darstellt,
· n eine ganze Zahl von 3 bis 6 ist,
- mindestens einen Initiator,
- mindestens einen Polymerisations-Beschleuniger,
- und Wasser,
dadurch gekennzeichnet, daß
· die Menge an Monomer(en) der Formel (I) 10 bis 95 Gewichtsprozent in bezug auf das Gewicht der genannten Zusammensetzungen darstellt;
· die genannten Zusammensetzungen außerdem mindestens 0,1 Gewichtsprozent einer vernetzenden Verbindung, ausgewählt unter den Estern mit mindestens zwei ethylenischen Bindungen, in bezug auf das Gewicht des (der) Monomers(en) der Formel (I) enthalten;
· der genannte Initiator unter den Alkalimetallpersulfaten, Ammoniumpersulfat und Wasserstoffperoxid ausgewählt wird.

2. Zusammensetzungen nach Anspruch 1, dadurch gekennzeichnet, daß der Initiator Ammoniumpersulfat oder Natriumpersulfat ist.

3. Zusammensetzungen nach einem der Ansprüche 1 oder 2, dadurch gekennzeichnet, daß die Menge an Initiator 0,1 bis 50 Gewichtsprozent in bezug auf das Gewicht des Monomers der Formel (I) beträgt.

4. Zusammensetzungen nach einem der Ansprüche 1 bis 3, dadurch gekennzeichnet, daß der Polymerisations-Beschleuniger ein Amin ist.

5. Zusammensetzungen nach einem der Ansprüche 1 bis 4, dadurch gekennzeichnet, daß der Polymerisations-Beschleuniger ein tertiäres Amin ist, ausgewählt unter Diethylamino-propionitril, Triethanolamin, Dimethylamino-acetonitril, Diethylen-triamin, N,N-Dimethylanilin, Dimethylaminoethyl-methacrylat, Dimethylaminoethyl-acrylat, Triethanolamin-methacrylat und Triethanolamin-acrylat.

6. Zusammensetzungen nach einem der Ansprüche 1 bis 5, dadurch gekennzeichnet, daß der Polymerisations-Beschleuniger 0,1 bis 100 Gewichtsprozent des Gewichtes des Monomers der Formel (I) darstellt.

7. Zusammensetzungen nach einem der Ansprüche 1 bis 6, dadurch gekennzeichnet, daß das Monomer der Formel (I) Ethyl-2-(methoxytriethoxy)-methacrylat (n=4) ist, allein oder in Mischung mit seinen niedrigeren oder höheren Homologen (n = 3, 5 oder 6).

8. Zusammensetzungen nach einem der Ansprüche 1 bis 7, dadurch gekennzeichnet, daß sie 20 bis 90 Prozent Monomer der Formel (I) umfassen.

9. Zusammensetzungen nach einem der Ansprüche 1 bis 8, dadurch gekennzeichnet, daß die vernetzende Verbindung Tetraethylenglycol-dimethacrylat, ein Polyethylenglycol-dimethacrylat oder Allyl-methacrylat ist.

10. Zusammensetzungen nach Anspruch 9, dadurch gekennzeichnet, daß die vernetzende Verbindung 0,1 bis 20 Gewichtsprozent in bezug auf das Gewicht des Monomers der Formel (I) darstellt.

11. Verwendung der Zusammensetzungen nach irgendeinem der Ansprüche 1 bis 10 zur Realisierung von Abdichtungen unterirdischer Medien.

## Patentansprüche (Patentansprüche für folgende(n) Vertragsstaat(en): ES)

1. Verfahren zum Abdichten eines unterirdischen Mediums, dadurch gekennzeichnet, daß man in das genannte unterirdische Medium eine polymerisierbare wäßrige Zusammensetzung einbringt, die umfaßt:
- 10 bis 95 Gewichtsprozent, in bezug auf das Gewicht der genannten Zusammensetzung, von mindestens einem in Wasser löslichen oder dispergierbaren Monomeren der allgemeinen Formel (I) 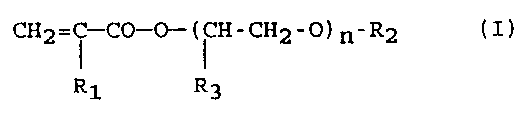 in der
· R₁ ein Wasserstoffatom oder einen Methylrest darstellt,
· R₂ einen Methylrest oder einen Ethylrest bedeutet,
· R₃ ein Wasserstoffatom oder einen Methylrest darstellt,
· n eine ganze Zahl von 3 bis 6 ist,
- mindestens 0,1 Gewichtsprozent, in bezug auf das (die) Monomer(en) der Formel (I), einer vernetzenden Verbindung, ausgewählt unter den Estern mit mindestens zwei ethylenischen Bindungen,
- mindestens einen Initiator, ausgewählt unter den Alkalimetallpersulfaten, Ammoniumpersulfat und Wasserstoffperoxid,
- mindestens einen Polymerisations-Beschleuniger, wobei die genannte Zusammensetzung in situ vernetzt.

2. Verfahren nach Anspruch 1, dadurch gekennzeichnet, daß der Initiator Ammoniumpersulfat oder Natriumpersulfat ist.

3. Verfahren nach einem der Ansprüche 1 oder 2, dadurch gekennzeichnet, daß die Menge an Initiator 0,1 bis 50 Gewichtsprozent in bezug auf das Gewicht des Monomers der Formel (I) beträgt.

4. Verfahren nach einem der Ansprüche 1 bis 3, dadurch gekennzeichnet, daß der Polymerisations-Beschleuniger ein Amin ist.

5. Verfahren nach einem der Ansprüche 1 bis 4, dadurch gekennzeichnet, daß der Polymerisations-Beschleuniger ein tertiäres Amin ist, ausgewählt unter Diethylamino-propionitril, Triethanolamin, Dimethylamino-acetonitril, Diethylen-triamin, N,N-Dimethylanilin, Dimethylaminoethyl-methacrylat, Dimethylaminoethyl-acrylat, Triethanolamin-methacrylat und Triethanolamin-acrylat.

6. Verfahren nach einem der Ansprüche 1 bis 5, dadurch gekennzeichnet, daß der Polymerisations-Beschleuniger 0,1 bis 100 Gewichtsprozent des Gewichtes des Monomers der Formel (I) darstellt.

7. Verfahren nach einem der Ansprüche 1 bis 6, dadurch gekennzeichnet, daß das Monomer der Formel (I) Ethyl-2-(methoxy-triethoxy)-methacrylat (n=4) ist, allein oder in Mischung mit seinen niedrigeren oder höheren Homologen (n = 3, 5 oder 6).

8. Verfahren nach einem der Ansprüche 1 bis 7, dadurch gekennzeichnet, daß die Zusammensetzung 20 bis 90 Prozent Monomer der Formel (I) umfaßt.

9. Verfahren nach einem der Ansprüche 1 bis 8, dadurch gekennzeichnet, daß die vernetzende Verbindung Tetraethylenglycol-dimethacrylat, ein Polyethylenglycol-dimethacrylat oder Allylmethacrylat ist.

10. Verfahren nach Anspruch 9, dadurch gekennzeichnet, daß die vernetzende Verbindung 0,1 bis 20 Gewichtsprozent in bezug auf das Gewicht des Monomers der Formel (I) darstellt.
